# EUROPÄISCHE PATENTSCHRIFT

(11) **EP 3 668 776 B1**
(45) Veröffentlichungstag und Bekanntmachung des Hinweises auf die Patenterteilung: **25.08.2021**
(21) Anmeldenummer: 19801282.5
(22) Anmeldetag: 06.11.2019
(51) Int. Cl.: B62D 21/11, B62D 25/08, B62D 21/15

(54) **VORBAUSTRUKTURANORDNUNG FÜR EINEN KRAFTWAGENROHBAU SOWIE AGGREGATETRÄGER FÜR EINE DERARTIGE VORBAUSTRUKTURANORDNUNG**
FRONT END STRUCTURE ARRANGEMENT FOR A MOTOR VEHICLE SHELL AND ASSEMBLY CARRIER FOR SUCH A FRONT END STRUCTURE ARRANGEMENT
ENSEMBLE DE STRUCTURE DE PARTIE AVANT DESTINÉ À UNE CAISSE BRUTE D'AUTOMOBILE AINSI QUE SUPPORT D'ORGANES DESTINÉ À UN TEL ENSEMBLE DE STRUCTURE DE PARTIE AVANT

(30) Priorität: 09.11.2018 DE 102018008832
(43) Veröffentlichungstag der Anmeldung: 24.06.2020
(73) Patentinhaber: Daimler AG, 70372 Stuttgart (DE)
(72) Erfinder: CARL, Michael, 70839 Gerlingen (DE)
(74) Vertreter: JENSEN & SON
(86) Internationale Anmeldenummer: PCT/EP2019/080442
(87) Internationale Veröffentlichungsnummer: WO 2020/094742

(56) Entgegenhaltungen:
- WO-A1-2016/149836
- DE-A1- 4 025 031
- DE-A1-102013 012 875
- DE-A1-102017 002 972

## Beschreibung

Die Erfindung betrifft eine Vorbaustrukturanordnung für einen Kraftwagenrohbau, gemäß Oberbegriff des Anspruchs 1. Des Weiteren betrifft die Erfindung einen Aggregateträger für eine derartige Vorbaustrukturanordnung, gemäß Oberbegriff des Anspruchs 10.

Eine derartige Vorbaustrukturanordnung ist beispielsweise bereits aus der DE 10 2017 002 972 A1 bekannt, bei der eine Vorbaustruktur des Kraftwagenrohbaus zwei in Fahrzeuglängsrichtung parallel zueinander und voneinander beabstandet verlaufende Längsträger umfasst, welche an ihren vorderen Enden zumindest mittelbar über einen Querträger, im vorliegenden Fall einen Stoßfängerquerträger, miteinander verbunden sind. Weiterhin umfasst die Vorbaustrukturanordnung einen am Kraftwagenrohbau befestigten Aggregateträger zur Aufnahme und Halterung eines elektrischen Antriebs. Der Aggregateträger erstreckt sich dabei in einem Freiraum zwischen den Längsträgern und weist jeweilige Seitenbereiche auf, die unter Ausbildung eines Spaltes seitlich entlang des jeweiligen Längsträgers verlaufen.

Durch die zunehmende Vielfalt an Antriebsaggregaten von Kraftwagen ergeben sich viele unterschiedliche Bauraumsituationen im Bereich einer einheitlichen Vorbaustruktur des Kraftwagens, wodurch das Unfallverhalten unterschiedlicher Vorbaustrukturanordnungen erheblich variieren kann. Insbesondere Frontalkollisionen mit geringer Breitenüberdeckung der Unfallgegner beziehungsweise der Vorbaustrukturanordnung mit einer Crashbarriere oder auch ein Schrägaufprall auf einen Unfallgegner oder eine Crashbarriere, insbesondere mit geringer oder gar keiner Überdeckung der Vorbaustruktur mit derjenigen des Unfallgegners/Hindernisses, sind hinsichtlich des Unfallverhaltens bislang nur mit aufwändigen anderweitigen Maßnahmen beherrschbar.

Aufgabe der vorliegenden Erfindung ist es daher, eine Vorbaustrukturanordnung sowie einen Aggregateträger der eingangs genannten Art zu schaffen, mittels welchen sich das Unfallverhalten der Vorbaustrukturanordnung auf einfache Weise erheblich verbessern lässt.

Diese Aufgabe wird erfindungsgemäß durch eine Vorbaustrukturanordnung mit den Merkmalen des Anspruchs 1 sowie durch einen Aggregateträger mit den Merkmalen des Anspruchs 10 gelöst. Vorteilhafte Weiterbildungen der Erfindung sind Gegenstand der abhängigen Ansprüche.

Um eine Vorbaustrukturanordnung der eingangs genannten Art zu schaffen, welche ein verbessertes Unfallverhalten aufweist, ist es erfindungsgemäß vorgesehen, dass im Spalt zwischen wenigstens einem der Seitenbereiche des Aggregateträgers und dem seitlich zugeordneten, das heißt benachbart zu diesem Seitenbereich angeordneten Längsträger ein Abstützelement einer Schutzeinrichtung vorgesehen ist, welches unter Ausbildung eines weiteren, kleineren Spaltes und dem zugeordneten Längsträger seitlich entlang von diesem verläuft. Demzufolge wird in wenigstens einem der beiden Spalte zwischen den Seitenbereichen des Aggregateträgers und dem jeweiligen, seitlich zugeordneten Längsträger ein Abstützelement angeordnet und hierdurch ein weiterer, das heißt ein neuer Spalt zwischen dem Abstützelement und dem zugehörigen Längsträger geschaffen, welcher kleiner ist, das heißt eine geringe Breite aufweist als der ursprüngliche Spalt zwischen Aggregateträger und dem benachbart angeordneten Längsträger in Abwesenheit des Abstützelements. Somit wird durch das Abstützelement der entsprechende Spalt zu einem kleineren Spalt, welcher dann zwischen dem Abstützelement und dem zugeordneten Längsträger verläuft.

Das erfindungsgemäße Abstützelement bewirkt hierbei, dass bei einer Frontalkollision des Kraftwagens mit geringer oder keiner Breitenüberdeckung mit einem Hindernis oder bei einem schrägen Anprall eines Hindernisses an die Kraftwagenfront eine möglichst frühzeitige Blockbildung zwischen dem jeweiligen Längsträger, dem seitlich zugeordneten Abstützelement und dem Aggregateträger, sowie gegebenenfalls dem Antriebsaggregat selbst erfolgt, um hierdurch eine Energieübertragung auf die stoßabgewandte Seite des Fahrzeugs und eine Verlagerung des Fahrzeugs in Fahrzeugquerrichtung vom Ort des Aufpralls des Hindernisses weg zu bewirken, wodurch insgesamt Intrusionen in die hinter der Vorbaustruktur liegende Fahrgastzelle deutlich reduziert werden können. Es wird hier also im Kollisionsfall frühzeitig ein Lastpfad von einer Seite des Kraftwagens auf die gegenüberliegende Kraftwagenseite aufgebaut, über den die in die auf der einen Seite der Karosserietragstruktur eingeleiteten Crashkräfte über das Abstützelement und den Aggregateträger auf den anderen, auch als Hauptlängsträger aufweisenden Längsträger übertragen beziehungsweise weitergeleitet werden.

Der erfindungsgemäß zwischen dem Abstützelement und dem seitlich zugeordneten Längsträger vorgesehene weitere, kleinere Spalt hat dabei den Vorteil, dass die Strukturelemente der crashrelevanten Vorderwagenstruktur, und zwar insbesondere des dem Abstützelement zugewandten Längsträgers in Kombination mit dem daran abgestützten Querträger und gegebenenfalls mit dazwischen angeordneten Energieabsorptionselementen bei einer Frontalkollision mit voller oder zumindest teilweiser Überdeckung der Fahrzeugstruktur mit einem Hindernis beziehungsweise einem Unfallgegner nicht beeinträchtigt wird. Dies ist beispielsweise dadurch gegeben, dass bei einer unfallbedingten Deformation des Längsträgers unter Absorption von Aufprallenergie keine Störung durch das seitlich daneben angeordnete Abstützelement erfolgt. Das heißt, das mindestens eine Abstützelement beeinflusst vorzugsweise nicht oder nur im vernachlässigbaren Maße die gewünschte, definierte Deformation der Längsträger beziehungsweise der zwischen diesen und einem Stoßfängerbiegequerträger angeordneten, auch als Crashboxen bezeichneten Energieabsorptionselemente.

In weiterer Ausgestaltung der Erfindung ist das Abstützelement als Montageteil ausgebildet und auf Seiten des Aggregateträgers befestigt. Dies ermöglicht eine äußerst einfache Herstellung und Kombination des Aggregateträgers und Montage der Kombination aus dem Aggregateträger und der Schutzeinrichtung.

Eine weitere vorteilhafte Ausführungsform der Erfindung sieht vor, dass im Spalt zwischen beiden Seitenbereichen des Aggregateträgers und dem jeweils zugeordneten Längsträger ein jeweiliges Abstützelement der Schutzeinrichtung vorgesehen ist, welches jeweils unter Ausbildung eines weiteren, kleineren Spaltes seitlich entlang dem zugeordneten Längsträger verläuft. Durch die beidseitige Anordnung und Ausbildung des Abstützelements relativ zum seitlich zugeordneten Längsträger ergeben sich die bereits oben beschriebenen Vorteile auf beiden Fahrzeugseiten.

Eine weitere vorteilhafte Ausführungsform der Erfindung sieht vor, dass die beiden Abstützelemente der Schutzeinrichtung als Gleichteile ausgebildet sind. Hierdurch lässt sich die Herstellung und Montage der Schutzeinrichtung nochmals vereinfachen.

In weiterer Ausgestaltung der Erfindung erstreckt sich der Aggregateträger bis nahe des jeweiligen vorderen Endbereichs der Längsträger. Hierdurch ergibt sich bei einer Kollision mit geringer Breitenüberdeckung mit einem Hindernis beziehungsweise einem Unfallpartner beziehungsweise bei einem Schrägaufprall eines Unfallpartners oder eines Hindernisses eine besonders günstige Blockbildung in Richtung mit dem Aggregateträger, wodurch eine Krafteinleitung der Aufprallenergie auf die stoßabgewandte Fahrzeugseite und damit eine größere Verlagerung der Vorbaustruktur in Fahrzeugquerrichtung vom Unfallgegner/Hindernis weg erreicht werden kann. Auch hierdurch lässt sich wiederum die Gefahr einer Intrusion in die Fahrgastzelle und ein damit einhergehendes Verletzungsrisiko für die Fahrzeuginsassen reduzieren.

Eine weitere vorteilhafte Ausführungsform der Erfindung sieht vor, dass das Abstützelement den seitlich zugeordneten, das heißt unmittelbar benachbart angeordneten Längsträger in Fahrzeughochrichtung nach oben und/oder unten hin überragt. Hierdurch kann im Falle einer unfallbedingten Kraftbeaufschlagung eine zuverlässige Kraftübertragung zwischen dem jeweiligen Längsträger und dem zugeordneten Abstützelement auf besonders günstige Weise sichergestellt werden.

Eine weitere vorteilhafte Ausführungsform der Erfindung sieht vor, dass der Aggregateträger einen Querträger aufweist, welcher mit wenigstens einem Ende gegen das seitlich zugeordnete Abstützelement, insbesondere in dessen oberen Bereich, abgestützt ist. Auch hierdurch lässt sich eine besonders günstige Kraftübertragung einer unfallbedingten Kraft auf den seitlich angeordneten Längsträger, das zugehörige Abstützelement und im Weiteren den Aggregateträger realisieren.

Eine weitere vorteilhafte Ausführungsform der Erfindung ist gegeben, wenn sich das Abstützelement in einem unteren Bereich an einem Lager eines Aggregats am Aggregateträger abstützt. Somit ist eine besonders günstige Krafteinleitung über das Abstützelement in das jeweilige Aggregat möglich, welches dann ebenfalls zur Blockbildung beiträgt. Hierdurch lässt sich die Steifigkeit des Aggregateträgers zusätzlich erhöhen. Dabei kann das jeweilige Abstützelement zusätzlich oder ausschließlich an dem Hilfsrahmen des Aggregateträgers befestigt sein.

Die vorstehend im Zusammenhang mit der erfindungsgemäßen Vorbaustrukturanordnung beschriebenen Vorteile gelten in ebensolcher Weise für den Aggregateträger gemäß Anspruch 10.

Weitere Vorteile und Einzelheiten der Erfindung ergeben sich aus der nachfolgenden Beschreibung eines bevorzugten Ausführungsbeispiels sowie anhand der Zeichnung. Dabei zeigen:

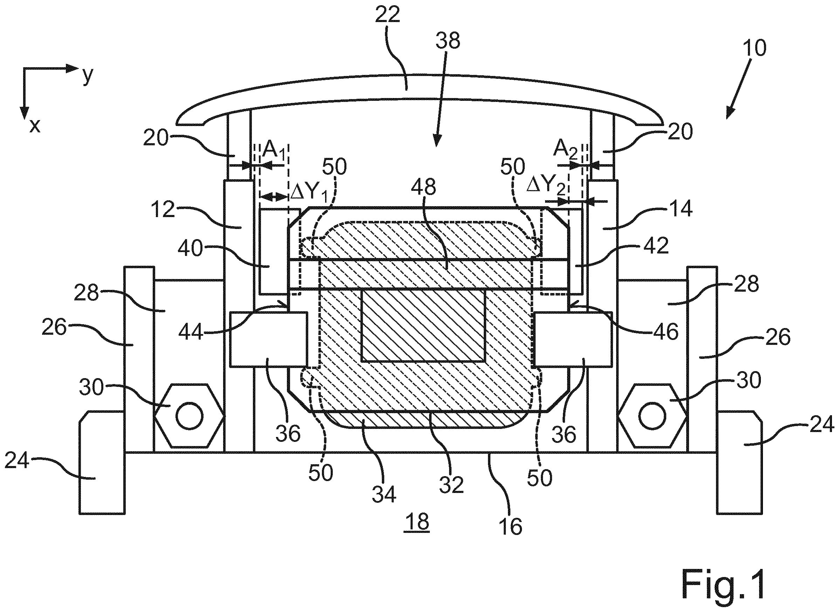

- Fig. 1: eine Draufsicht auf eine erfindungsgemäße Vorbaustrukturanordnung für eine Kraftwagenrohbau mit jeweiligen Längsträgern, welche an ihren vorderen Enden über einen Querträger miteinander verbunden sind und mit einem am Kraftwagenrohbau befestigten Aggregateträger, welcher sich in einem Freiraum zwischen den Längsträgern erstreckt und jeweiligen Seitenbereiche aufweist, die unter Ausbildung eines Spalts seitlich entlang dem jeweiligen Längsträger verlaufen, wobei in jedem Spalt ein Abstützelement unter Ausbildung eines weiteren, kleineren Spalts zum seitlich zugeordneten Längsträger hin angeordnet ist;

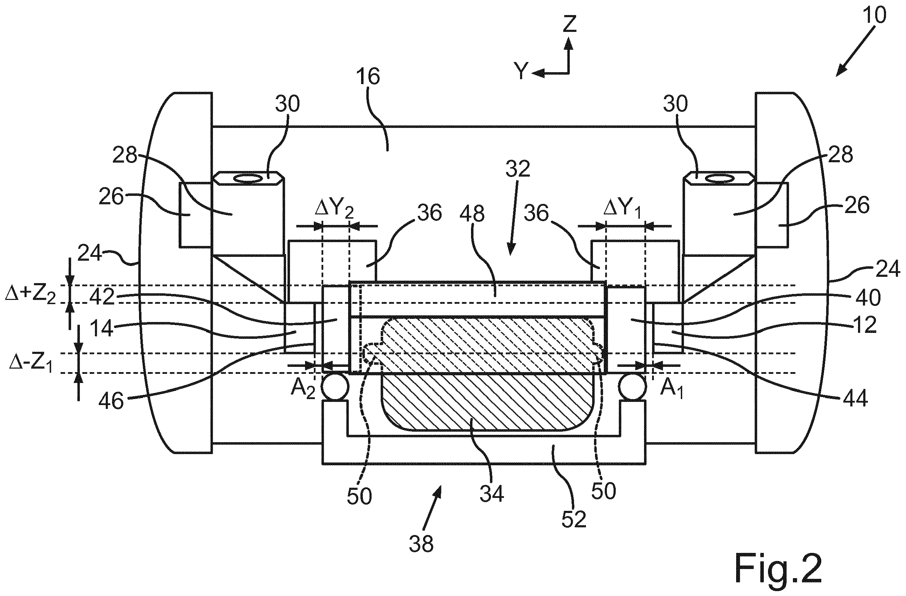

- Fig. 2: eine Vorderansicht auf die Vorbaustrukturanordnung gemäß Fig. 1, wobei insbesondere die Positionierung eines Antriebsaggregats am Aggregateträger mit zugehörigen Hilfsrahmen erkennbar ist;

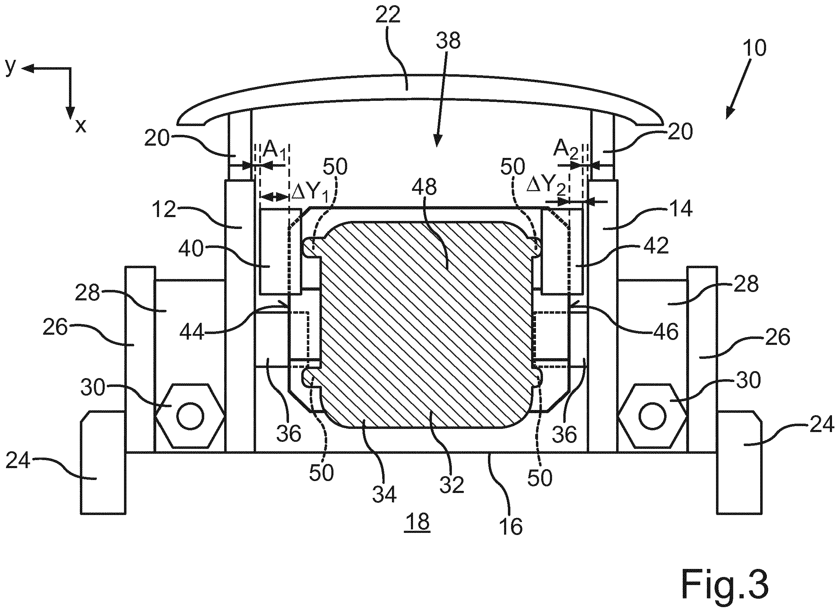

- Fig. 3: eine Unteransicht auf die Vorbaustrukturanordnung gemäß den Fig. 1 und 2;

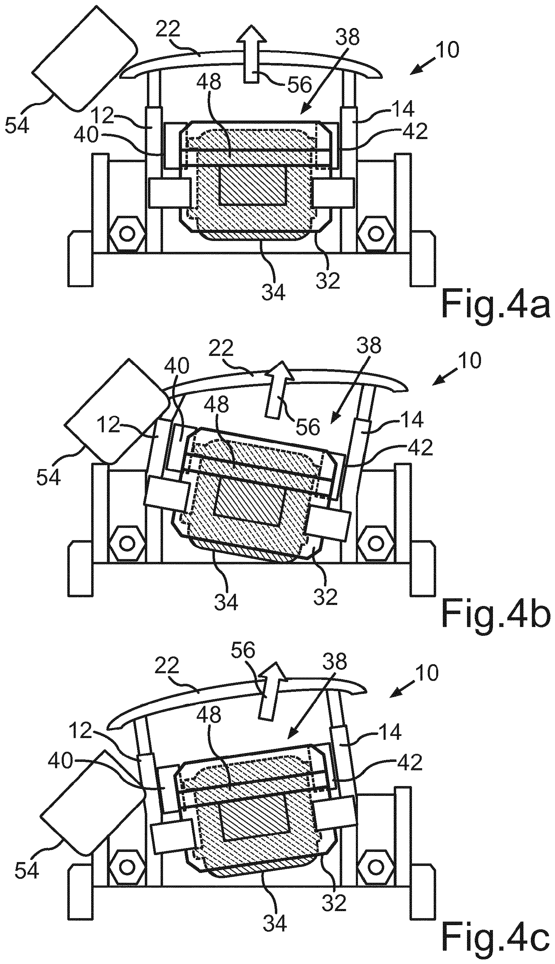

- Fig. 4a-c: jeweilige Draufsichten auf die Vorbaustrukturanordnung analog zu Fig. 1, welche die Deformation der Vorbaustrukturanordnung bei einem Schrägaufprall eines Hindernisses, beispielsweise eines Fahrzeugs ohne Überdeckung der Fahrzeugstrukturteile, vor dem Beginn der Kollision, in einer Frühphase des Aufpralls und in einer Spätphase des Aufpralls zeigen;

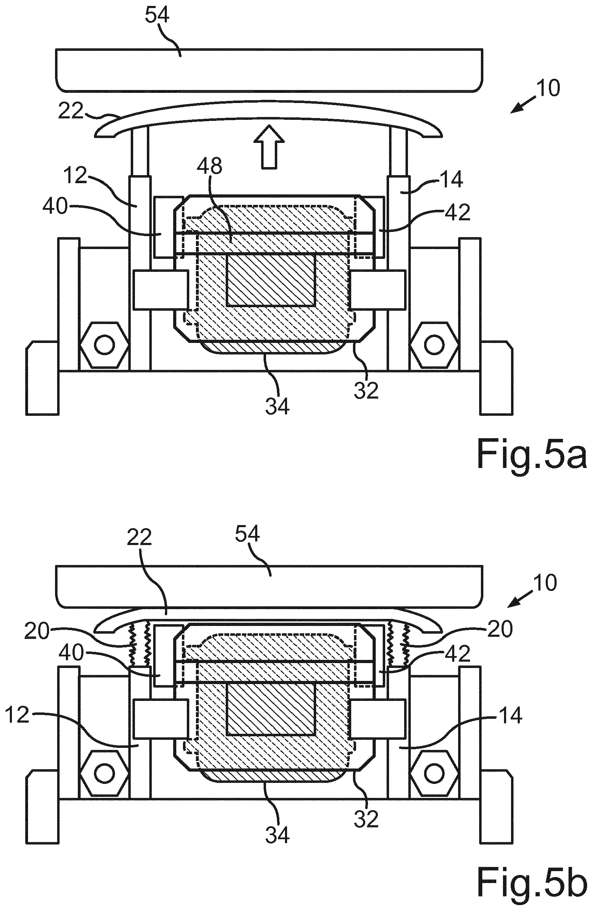

- Fig. 5a-b: jeweilige Draufsichten auf die Vorbaustrukturanordnung analog zu Fig. 1, wobei die Vorbaustrukturanordnung vor und im Verlauf einer Deformation in Folge einer unfallbedingten Kraftbeaufschlagung bei Kollision mit voller Überdeckung der Fahrzeugstruktur mit einem Unfallgegner beziehungsweise Hindernis gezeigt ist; und

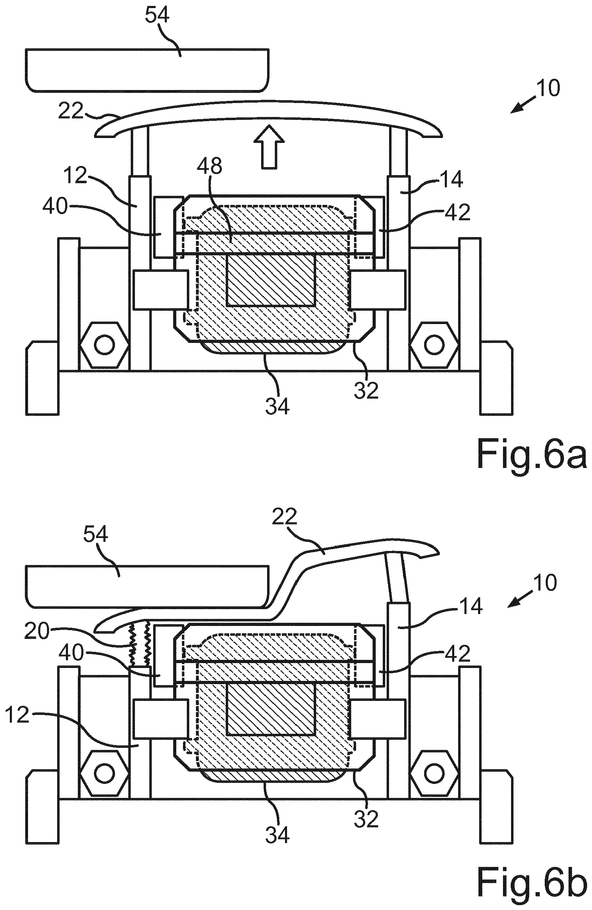

- Fig. 6a-b: jeweilige Draufsichten auf die Vorbaustrukturanordnung analog zu Fig. 1, wobei diese vor und während einer unfallbedingten Deformation in Folge einer Frontalkollision mit teilweiser Überdeckung der Fahrzeugstruktur mit einem Unfallgegner beziehungsweise Hindernis dargestellt ist.

In den Figuren 1 bis 6b sind gleiche oder funktionsgleiche Elemente mit gleichen Bezugszeichen versehen.

In den Fig. 1 bis 3 ist in einer Draufsicht, einer Vorderansicht und einer Unteransicht eine Vorbaustrukturanordnung für einen Personenkraftwagen dargestellt. Von einer Vorbaustruktur 10 sind im Wesentlichen jeweilige, auch als Hauptlängsträger bezeichnete Längsträger 12, 14 erkennbar, welche sich parallel zueinander ausgehend von einer vorderen Stirnwand 16 einer Fahrgastzelle 18 in Fahrzeuglängsrichtung (x-Richtung) nach vorne hin erstrecken. Die beiden Längsträger 12, 14 sind dabei an ihren vorderen Enden mittelbar - nämlich unter Vermittlung jeweiliger, häufig auch als Crashboxen bezeichnete Energieabsorptionselemente 20 - über einen Querträger 22, im vorliegenden Fall einen Stoßfängerquerträger, miteinander verbunden, der gemeinsam mit den Energieabsorptionselementen 20 einem Frontmodul zugeordnet sein kann. Vom Kraftwagenrohbau sind weitere, jeweilige Seitenwände 24 im Bereich entsprechender Türsäulen (A-Säulen) dargestellt, welche mit der Stirnwand 16 verbunden sind. Schließlich sind an der Stirnwand 16 auch obere Längsträger 26 abgestützt, welche sich ebenfalls in Fahrzeuglängsrichtung (x-Richtung) erstrecken und über Rohbauteile 28 mit den Längsträgern 12, 14 verbunden sind, wobei in die Rohbauteile 28 jeweilige Dämpferdome 30 beziehungsweise Federbeinaufnahmen für die korrespondierenden, nicht erkennbaren Vorderräder integriert sind.

Neben der Vorbaustruktur 10 umfasst die Vorbaustrukturanordnung insbesondere einen Aggregateträger 32, welcher im vorliegenden Fall zur Aufnahme eines Antriebsaggregats 34 für einen elektrisch betreibbaren Antriebsstrang des Kraftwagens ausgebildet ist. Der Aggregateträger 32 ist dabei im vorliegenden Fall über jeweilige Lagerelemente 36 am jeweils seitlich korrespondierenden Längsträger 12, 14 befestigt beziehungsweise an diesem getragen.

In Zusammenschau der Fig. 1 und 2 ist insbesondere erkennbar, dass der Aggregateträger 32 sich in einem Freiraum zwischen den Längsträgern 12, 14 befindet. Mit anderen Worten erstreckt sich der Aggregateträger 32 bezogen auf die Fahrzeughochrichtung (z-Richtung) zumindest über einen Höhenbereich zwischen den beiden Längsträgern 12, 14. Zudem erstreckt sich der Aggregateträger 32 bis nahe der jeweiligen vorderen Endbereiche der Längsträger 12, 14.

Ein jeweiliger Seitenbereich 44, 46 des Aggregateträgers 32 bildet mit den korrespondierenden Längsträgern 12, 14 jeweils einen Spalt S aus, welcher - wie im vorliegenden Fall - auf beiden Seiten des Aggregateträgers 32 unterschiedliche Breiten oder aber identische Breiten aufweisen können.

In diesem jeweiligen Spalt S zwischen dem jeweiligen Seitenbereich 44, 46 und dem korrespondierenden Längsträger 12, 14 ist vorliegend jeweils ein Abstützelement 40, 42 einer Schutzeinrichtung 38 angeordnet, welches innseitig an dem jeweiligen Seitenbereich 44, 46 des Aggregateträgers 32 abgestützt ist und welches außenseitig einen weiteren, gegenüber dem jeweils zugeordneten Spalt S kleineren Spalt A₁ beziehungsweise A₂ mit dem zugehörigen Längsträger 12, 14 ausbildet. Mit anderen Worten wird durch das jeweilige Abstützelement 40, 42 der jeweilige Spalt S zwischen dem Aggregateträger 32 und den jeweiligen Längsträgern 12, 14 auf den jeweiligen Spalt A₁ beziehungsweise A₂ zwischen dem jeweiligen Abstützelement 40, 42 und dem jeweiligen Längsträger 12, 14 reduziert. Die beiden kleineren Spalte A₁ beziehungsweise A₂ sind dabei vorliegend über die gesamte Länge - analog zum jeweiligen Spalt S - gebildet, das heißt das jeweilige Abstützelement 40, 42 erstreckt sich parallel zum korrespondierenden Hauptlängsträger 12, 14.

Jedes der beiden Abstützelemente 40, 42 ist vorliegend als ein- oder mehrteiliges Montageteil ausgebildet, welches im Rahmen einer Vormontage am Aggregateträger 32 befestigt werden kann und anschließend im Rahmen beispielsweise einer Endmontage des Aggregateträgers 32 mit dem Antriebsaggregat 34 gemeinsam in die Vorbaustruktur 10 eingebaut wird. Die Ausbildung der jeweiligen Abstützelemente 40, 42 als jeweilige Montageteile und deren vorzugsweise Vorab-Befestigung am Aggregateträger 32 ermöglicht somit eine äußerst einfache Herstellung und Montage des Aggregateträgers 32 mit der Schutzeinrichtung 38. An dieser Stelle sei erwähnt, dass auch lediglich auf einer Seite des Aggregateträgers 32 ein Abstützelement 40 vorgesehen sein kann, an der anderen Seite jedoch nicht. Außerdem können die beiden Abstützelemente 40, 42 - im Falle einer individuellen Anpassung an bauliche Gegebenheiten oder variierender Steifigkeit der Vorbaustruktur 10, oder aus anderen Gründen, unterschiedlich dimensioniert sein. Besonders günstig ist es allerdings, wenn die beiden Abstützelemente 40, 42 als Gleichteile gestaltet und demzufolge äußerst einfach hergestellt werden können. Die Abstützelemente 40, 42 können insbesondere im Druckguss- oder Strangpressverfahren aus einer Metalllegierung hergestellt sein. Gegebenenfalls können sie beispielsweise nach Art von Energieabsorptionselementen (Crashboxen) ausgebildet sein, beispielsweise aus einem entsprechenden Blechwerkstoff, oder aber insgesamt als Kunststoffbauteile ausgebildet sein.

Wie aus Fig. 2 erkennbar ist, ist das vorliegend rechts erkennbare Abstützelement 40 im Wesentlichen rechteckförmig ausgestaltet und weist eine Breite ΔY1 auf. Das gegenüber angeordnete Abstützelement 42 ist im Querschnitt im Wesentlichen L-förmig ausgebildet und weist eine Schenkelbreite ΔY2 auf, welche gegenüber der Breite ΔY1 des anderen Abstützelements 40 geringer ist.

Beide Abstützelemente 40, 42 stützen sich im vorliegenden Fall an einem Querträger 48 ab, welcher - wie dies insbesondere aus Fig. 1 erkennbar ist - in einem vorderen Bereich des Aggregateträgers 32 in Fahrzeugquerrichtung und oberseitig von diesem beziehungsweise vorderseitig des Antriebsaggregats 34 verläuft. In einem unteren Bereich stützen sich die Abstützelemente 40, 42 an einem jeweiligen Lager 50 ab, über welchen das Antriebsaggregat 34 am Aggregateträger 32 abgestützt und befestigt ist. Weiterhin ist aus Fig. 2 erkennbar, dass das jeweilige Abstützelement 40, 42 den jeweils seitlich zugeordneten Längsträger 12, 14 nach oben hin um ein Maß Δ+Z₁ und nach unten hin um ein Δ-Z₂ überragt.

Das Abstützen der Abstützelemente 40, 42 oberseitig am Querträger 48 des Aggregateträgers 32 und unterseitig über die Lager 50 am Antriebsaggregat 34 bewirkt eine äußerst günstige Blockbildung, sodass auf im Weiteren noch näher beschriebene Weise Unfallkräfte besonders günstig zwischen beiden Fahrzeugseiten übertragen werden können.

Die Überragung der Längsträger 12, 14 durch das jeweilige Abstützelement 40, 42 bewirkt insbesondere eine besonders günstige Kraftübertragung einer unfallbedingten Kraft von der einen zur anderen Fahrzeugseite, auch wenn beispielsweise eine Komponente der Unfallkraft in Fahrzeughochrichtung (z-Richtung) orientiert ist und es demzufolge beispielsweise zu einer Höhenverlagerung der Abstützelemente 40, 42 mit dem Aggregateträger 32 und dem Antriebsaggregat 34 kommen sollte.

Schließlich ist aus Fig. 2 erkennbar, dass unterseitig an dem Antriebsaggregat 34 ein diesem zugeordneter Hilfsrahmen 52 in Form einer Achsstruktur, als Integralträger oder Fahrschemel ausgebildet sein kann, angeordnet ist. Durch diesen Hilfsrahmen 52 lässt sich die Steifigkeit beziehungsweise Blockbildung des gesamten Aggregateträgers 32 mit dem Antriebsaggregat 34 erhöhen.

In Fig. 4b und 4c sind in einer jeweiligen Draufsicht analog zu Fig. 1 die Vorbaustrukturanordnung im Verlauf eines Schrägaufpralls ohne Überdeckung der Fahrzeugstruktur mit einem Unfallgegner beziehungsweise einem Hindernis 54 dargestellt. Das Fahrzeug bewegt sich dabei gemäß dem Richtungspfeil 56 in Vorwärtsfahrtrichtung mit einer entsprechenden Geschwindigkeit. Gemäß Fig. 4b trifft dann die Vorbaustrukturanordnung im Bereich der linken Fahrzeugseite auf das Hindernis 54, wodurch eine Verlagerung der Vorbaustruktur 10 beziehungsweise des Fahrzeugs in Fahrzeugquerrichtung (y-Richtung) um den Betrag Y₁ erfolgt. Wie zusammen mit dem weiteren Verlauf des Unfallszenarios in einer Spätphase des Aufpralls gemäß Fig. 4c erkennbar ist, führt die möglichst frühzeitige Blockbildung der jeweilige Längsträger 12, 14 mit den Abstützelementen 40, 42 der Schutzeinrichtung 38 sowie des Aggregateträgers 32, in welchem außerdem das Antriebsaggregat 34 sowie die dazugehörigen Lager 50 und Querträger 48 für eine Aussteifung/Blockbildung sorgen, für eine Energieübertragung auf die stoßabgewandte Seite des Fahrzeugs und eine Verlagerung des Fahrzeugs in Fahrzeugquerrichtung (y-Richtung) um den Betrag Yᵢ, wodurch die Vorbaustrukturanordnung insgesamt weiter vom Hindernis 54 in Fahrzeugquerrichtung (y-Richtung) weg verlagert wird und hier durch die Intrusionen in die Fahrgastzelle 18 reduziert werden können. Zudem ändert sich die die Richtung des Fahrzeugs, wie dies anhand des Pfeils 56 erkennbar ist.

Das hier beschrieben Szenario im Zusammenhang mit einem Schrägaufprall gilt beispielsweise auch für eine Frontalkollision mit geringer oder keiner Breitenüberdeckung der Fahrzeugstruktur mit einem Hindernis beziehungsweise einem Unfallgegner.

Fig.5a zeigt analog zu Fig. 1 eine Draufsicht auf die Vorbaustrukturanordnung vor der Intrusion mit voller Überdeckung der Fahrzeugstruktur mit einem Unfallgegner beziehungsweise einem Hindernis.

Wie aus Fig. 5b erkennbar ist, welche die Vorbaustrukturanordnung in einer Spätphase des Aufpralls zeigt, erkennbar ist, ist durch die vorliegende Anordnung der Abstützelemente 40, 42 beziehungsweise durch das Vorsehen eines jeweiligen Spalts A₁ beziehungsweise A₂ zwischen dem jeweiligen Abstützelement 40, 42 und dem zugehörigen Längsträger 12, 14 eine ungehinderte Deformation der Vorbaustruktur - insbesondere der Längsträger 12, 14 und der jeweiligen Energieabsorptionselemente 20 - weiterhin möglich, ohne dass die Deformation durch die Schutzeinrichtung 38 mit den Abstützelementen 40, 42 behindert werden würde.

Schließlich zeigt Fig. 6a eine Draufsicht auf die Vorbaustrukturanordnung analog zu Fig. 1 kurz vor einer Frontalkollision mit teilweiser Überdeckung der Fahrzeugstruktur mit einem Unfallgegner beziehungsweise dem Hindernis 54.

Wie dabei aus Fig. 6b, welche die Vorbaustrukturanordnung in einer Spätphase der Frontalkollision zeigt, erkennbar ist, wird auch hier die Energieabsorption insbesondere des Längsträgers 12 mit dem zugehörigen Energieabsorptionselement 20 nicht durch das seitlich zugeordnete Abstützelement 40 behindert.

Insgesamt ist somit erkennbar, dass die vorliegende Vorbaustrukturanordnung ein verbessertes Unfallverhalten insbesondere beim beschriebenen Schrägaufprall beziehungsweise einem Aufprall eines Hindernisses 54 mit geringer Breitenüberdeckung ermöglicht, indem eine verbesserte Blockbildung zwischen den jeweiligen Längsträgern 12, 14, der Schutzeinrichtung 38 mit den Abstützelementen 40, 42 und dem Aggregateträger 32 - gegebenenfalls unter Einbindung des Antriebsaggregats 34 - geschaffen wird, wohingegen die Funktionen der Vorbaustruktur 10 bei einer Frontalkollision mit voller Überdeckung oder teilweiser Überdeckung der Fahrzeugstruktur mit einem Unfallgegner beziehungsweise einem Hindernis 54 unverändert aufrechterhalten werden können.

## Patentansprüche

1. Vorbaustrukturanordnung für einen Kraftwagenrohbau, mit einer Vorbaustruktur (10), welche zwei in Fahrzeuglängsrichtung verlaufende Längsträger (12, 14) umfasst, welche an ihrem vorderen Ende zumindest mittelbar über einen Querträger (22) miteinander verbunden sind, mit einem am Kraftwagenrohbau befestigten Aggregateträger (32), welcher sich in einem Freiraum zwischen den Längsträgern (12, 14) erstreckt und welcher jeweilige Seitenbereiche (44, 46) aufweist, die sich unter Ausbildung eines Spaltes (S) seitlich entlang dem jeweiligen Längsträger (12, 14) erstrecken,
**dadurch gekennzeichnet, dass**
im Spalt (S) zwischen wenigstens einem der Seitenbereiche (44, 46) des Aggregateträgers (32) und dem zugeordneten Längsträger (12, 14) ein Abstützelement (40, 42) einer Schutzeinrichtung (38) vorgesehen ist, welches unter Ausbildung eines weiteren, kleineren Spaltes (A1, A2) zwischen dem Abstützelement (40, 42) und dem zugeordneten Längsträger (12, 14) seitlich entlang von diesem verläuft.

2. Vorbaustrukturanordnung nach Anspruch 1,
**dadurch gekennzeichnet, dass**
das Abstützelement (40, 42) als Montageteil ausgebildet und auf Seiten des Aggregateträgers (32) befestigt ist.

3. Vorbaustrukturanordnung nach Anspruch 1 oder 2,
**dadurch gekennzeichnet, dass**
im Spalt (S) zwischen beiden Seitenbereichen (44, 46) des Aggregateträgers (32) und dem jeweils zugeordneten Längsträger (12, 14) ein jeweiliges Abstützelement (40, 42) der Schutzeinrichtung (38) vorgesehen ist, welches jeweils unter Ausbildung eines weiteren, kleineren Spaltes (A₁, A₂) seitlich entlang dem zugeordneten Längsträger (12, 14) verläuft.

4. Vorbaustrukturanordnung nach Anspruch 3,
**dadurch gekennzeichnet, dass**
die beiden Abstützelemente (40, 42) der Schutzeinrichtung (38) als Gleichteile ausgebildet sind.

5. Vorbaustrukturanordnung nach einem der vorhergehenden Ansprüche,
**dadurch gekennzeichnet, dass**
sich der Aggregateträger (32) bis nahe der jeweiligen vorderen Endbereiche der Längsträger (12, 14) erstreckt.

6. Vorbaustrukturanordnung nach einem der vorhergehenden Ansprüche,
**dadurch gekennzeichnet, dass**
das Abstützelement (40, 42) den seitlich zugeordneten Längsträger (12, 14) in Fahrzeughochrichtung nach oben und/oder unten hin überragt.

7. Vorbaustrukturanordnung nach einem der vorhergehenden Ansprüche,
**dadurch gekennzeichnet, dass**
der Aggregateträger (32) einen Querträger (48) aufweist, welcher mit wenigstens einem Ende gegen das seitlich zugeordnete Abstützelement (40, 42), insbesondere in dessen oberen Bereich, abgestützt ist.

8. Vorbaustrukturanordnung nach einem der vorhergehenden Ansprüche,
**dadurch gekennzeichnet, dass**
sich das Abstützelement (40, 42) in einem unteren Bereich an einem Lager (50) eines Aggregats am Aggregateträger (32) abstützt.

9. Vorbaustrukturanordnung nach einem der vorhergehenden Ansprüche,
**dadurch gekennzeichnet, dass**
unterseitig an dem Aggregateträger (32) ein diesem zugeordneter Hilfsrahmen (52) angeordnet ist, an welchem das jeweilige Abstützelement (40, 42) befestigt ist.

10. Aggregateträger (32) für eine Vorbaustrukturanordnung eines Kraftwagenrohbaus, welcher zur Anordnung in einem Freiraum zwischen zwei in Fahrzeuglängsrichtung verlaufenden und an ihren vorderen Ende zumindest mittelbar über einen Querträger (22) miteinander verbunden Längsträger (12, 14) einer Vorbaustruktur(10) ausgebildet ist und Befestigungselemente zur Festlegung des Aggregateträgers (32) am Kraftwagenrohbau umfasst, und welcher jeweilige Seitenbereiche (44, 46) aufweist, welche unter Ausbildung eines Spaltes (S) seitlich entlang dem jeweiligen Längsträger (12, 14) verlaufen,
**dadurch gekennzeichnet, dass**
an dem Aggregateträger (32) wenigstens ein Abstützelement (40, 42) einer Schutzeinrichtung (38) vorgesehen ist, welches im Einbauzustand des Aggregateträgers (32) im Spalt (S) zwischen einem der Seitenbereiche (44, 46) des Aggregateträgers (32) und dem zugeordneten Längsträger (12, 14) unter Ausbildung eines weiteren, kleineren Spaltes (A₁, A₂) zwischen dem Abstützelement (40, 42) und dem zugeordneten Längsträger (12, 14) seitlich entlang von diesem verläuft.

## Claims

1. Front end structure assembly for a motor vehicle shell, with a front end structure (10) comprising two side members (12, 14), which extend in the longitudinal direction of the vehicle and are at their front end joined to each other at least indirectly by a crossmember (22), with an assembly carrier (32), which is secured to the motor vehicle shell, extends in a free space between the side members (12, 14) and has respective side regions (44, 46) extending laterally along the respective side member (12, 14) while forming a gap (S),
**characterised in that**
in the gap (S) between at least one of the side regions (44, 46) of the assembly carrier (32) and the associated side member (12, 14) there is provided a support element (40, 42) of a protective device (38), which support element (40, 42) extends laterally along the associated side members (12, 14) while forming a further smaller gap (A1, A2) between the support element (40, 42) and the latter.

2. Front end structure assembly according to claim 1,
**characterised in that**
the support element (40, 42) is designed as an assembly part and secured to the side of the assembly carrier (32).

3. Front end structure assembly according to claim 1 or 2,
**characterised in that**
in the gap between the two side regions (44, 46) of the assembly carrier (32) and the respectively associated side member (12, 14) there is provided a respective support element (40, 42) of the protective device (38), each of which support elements extends laterally along the associated side member (12, 14) while forming a further smaller gap (A₁, A₂).

4. Front end structure assembly according to claim 3,
**characterised in that**
the two support elements (40, 42) of the protective device (38) are designed as carry-over parts.

5. Front end structure assembly according to any of the preceding claims,
**characterised in that**
the assembly carrier (32) extends close to the respective front end regions of the side members (12, 14).

6. Front end structure assembly according to any of the preceding claims,
**characterised in that**
the support element (40, 42) juts out beyond the laterally associated side member (12, 14) towards the top and/or the bottom in the vertical direction of the vehicle.

7. Front end structure assembly according to any of the preceding claims,
**characterised in that**
the assembly carrier (32) has a crossmember (48), which is supported with at least one end against the laterally associated support element (40, 42), in particular in the upper region thereof.

8. Front end structure assembly according to any of the preceding claims,
**characterised in that**
the support element (40, 42) is supported in a lower region on a bearing (50) of an assembly at the assembly carrier (32).

9. Front end structure assembly according to any of the preceding claims,
**characterised in that**
an auxiliary frame (52) assigned to the assembly carrier (32), to which auxiliary frame (52) the respective support element (40, 42) is secured, is located on the underside at the assembly carrier (32).

10. Assembly carrier (32) for a front end structure assembly of a motor vehicle, which is designed for placement in a free space between two side members (12, 14) of a front end structure, which extend in the longitudinal direction of the vehicle and are at their front end joined to each other at least indirectly by a crossmember (22), and which comprises fastening elements for securing the assembly carrier (32) to the motor vehicle shell, and which has respective side regions (44, 46) extending laterally along the respective side member (12, 14) while forming a gap (S),
**characterised in that**
at the assembly carrier (32) there is provided at least one support element (40, 41) of a protective device (38), which support element (40, 42) extends in the installed state of the assembly carrier (32) in the gap (S) between one of the side regions (44, 46) of the assembly carrier (32) and the associated side member (12, 14) while forming a further smaller gap (A₁, A₂) between the support element (40, 42) and the associated side member (12, 14).

## Revendications

1. Système de structure de partie avant pour une coque de véhicule automobile, comprenant une structure de partie avant (10), qui comprend deux longerons (12, 14) partant dans la direction longitudinale du véhicule qui sont reliés l'un à l'autre sur leur extrémité avant au moins indirectement par une traverse (22), un support d'agrégat (32) fixé à la coque de véhicule automobile, qui s'étend entre les longerons (12, 14) dans un espace libre et qui présente des zones latérales (44, 46) respectives qui s'étendent latéralement le long du longeron respectif (12, 14) afin de former une fente (S),
**caractérisé en ce que**
dans la fente (S) entre au moins l'une des zones latérales (44, 46) du support d'agrégat (32) et le longeron associé (12, 14) est disposé un élément d'appui (40, 42) d'un dispositif de protection (38) qui s'étend latéralement à partir dudit longeron pour former une autre fente (A1, A2) plus petite entre l'élément d'appui (40, 42) et le longeron associé (12, 14).

2. Système de structure de partie avant selon la revendication 1, **caractérisé en ce que** l'élément d'appui (40, 42) est conçu sous forme de partie de montage et est fixé sur les côtés du support d'agrégat (32).

3. Système de structure de partie avant selon la revendication 1 ou la revendication 2, **caractérisé en ce que** dans la fente (S) est disposé entre deux zones latérales (44, 46) du support d'agrégat (32) et le longeron respectivement associé (12, 14) un élément d'appui respectif (40, 42) du dispositif de protection (38), qui s'étend latéralement le long du longeron associé (12, 14) afin de former respectivement une autre fente plus petite (A₁, A2).

4. Système de structure de partie avant selon la revendication 3, **caractérisé en ce que** les deux éléments d'appui (40, 42) du dispositif de protection (38) sont conçus sous la forme de parties égales.

5. Système de structure de partie avant selon l'une quelconque des revendications précédentes, **caractérisé en ce que** le support d'agrégat (32) s'étend jusqu'à proximité des zones d'extrémité avant respectives des longerons (12, 14).

6. Système de structure de partie avant selon l'une quelconque des revendications précédentes, **caractérisé en ce que** l'élément d'appui (40, 42) fait saillie vers le haut et/ou vers le bas des longerons (12, 14) associés latéralement dans le sens vertical de véhicule.

7. Système de structure de partie avant selon l'une quelconque des revendications précédentes, **caractérisé en ce que** le support d'agrégat (32) présente une traverse (48) qui s'appuie avec au moins une extrémité contre l'élément d'appui associé latéralement (40, 42), en particulier dans sa zone supérieure.

8. Système de structure de partie avant selon l'une quelconque des revendications précédentes, **caractérisé en ce que** l'élément d'appui (40, 42) s'appuie dans une zone inférieure sur un appui (50) d'un agrégat sur le support d'agrégat (32).

9. Système de structure de partie avant selon l'une quelconque des revendications précédentes, **caractérisé en ce que** côté inférieur sur le support d'agrégat (32) est disposé un châssis de support (52) associé à ce dernier sur lequel est fixé l'élément d'appui (40, 42) respectif.

10. Support d'agrégat (32) pour un système de structure de partie avant d'une coque de véhicule automobile qui est conçu pour disposer dans un espace libre entre deux longerons (12, 14) d'une structure de partie avant (10) reliés l'un à l'autre avant au moins indirectement par une traverse (22) s'étendant dans le sens longitudinal du véhicule et sur leur extrémité et comprend des éléments de fixation pour fixer le support d'agrégat (32) à la coque de véhicule automobile, et qui présente des zones latérales respectives (44, 46) qui s'étendant latéralement le long du support longitudinal respectif (12, 14) pour former une fente (S), **caractérisé en ce que** sur le support d'agrégat (32) est disposé au moins un élément d'appui (40, 42) d'un dispositif de protection (38) qui s'étend latéralement le long de celui-ci, lorsque le support d'agrégat (32) est monté dans la fente (S) entre une des zones latérales (44, 46) du support d'agrégat (32) et le longeron associé (12, 14) pour former une autre fente (A₁, A₂) plus petite entre l'élément d'appui (40, 42) et le longeron associé (12, 14).
